# EUROPÄISCHE PATENTSCHRIFT

(11) **EP 1 898 122 B1**
(45) Veröffentlichungstag und Bekanntmachung des Hinweises auf die Patenterteilung: **07.03.2012**
(21) Anmeldenummer: 07112239.4
(22) Anmeldetag: 11.07.2007
(51) Int. Cl.: H02K 7/06, F16H 25/20

(54) **Stellvorrichtung zur linearen Verstellung eines Stellgliedes**
Actuator device for linear adjustment of an actuator
Dispositif de réglage destiné au réglage linéaire d'un actionneur

(30) Priorität: 06.09.2006 DE 102006041660
(43) Veröffentlichungstag der Anmeldung: 12.03.2008
(73) Patentinhaber: Pierburg GmbH, 41460 Neuss (DE)
(72) Erfinder: Schmitz, Eckehard, 41066 Mönchengladbach (DE)
(74) Vertreter: Patentanwälte ter Smitten Eberlein Rütten Partnerschaftsgesellschaft

(56) Entgegenhaltungen:
- WO-A1-2006/061337
- DE-A1- 4 322 133
- US-A1- 2002 074 866

## Beschreibung

Die Erfindung betrifft Stellvorrichtung zur linearen Verstellung eines Stellgliedes mit einem Gehäuse, in dem ein reversibler Elektromotor angeordnet ist, über den eine Gewindespindel in rotatorische Bewegung versetzbar ist, auf welcher eine durch eine im Gehäuse angeordnete Nutführung gegen rotatorische Bewegung festgelegte Spindelmutter angeordnet ist, welche fest mit einer als Stellglied dienenden ersten Hülse verbunden ist, die die Gewindespindel zumindest teilweise umgibt und welche durch eine Öffnung im Gehäuse nach außen ragt, wobei Mittel zur Anschlagdämpfung im Gehäuse angeordnet sind.

Stellvorrichtungen, bei denen die rotatorische Bewegung eines Elektromotors bzw. einer von einem Elektromotor angetriebenen Spindel über eine rotatorisch festgesetzte Mutter, welche sich auf der Spindel auf- und abbewegen kann, in eine lineare Bewegung umgewandelt wird, sind allgemein bekannt und werden in einer Vielzahl von Anmeldungen beschrieben. Sie werden unter anderem zur Verstellung von Hubventilen im Fahrzeugbau verwendet.

Nachteilig an den bekannten Ausführungen ist jedoch, dass eine genaue Endpositionierung ohne Lagerückmeldung nur durch Anfahren eines Endanschlags erreicht werden kann. Es entsteht somit ein ruckartiges Aus- und Einfahren des Stellgliedes. Häufig entsteht hierdurch ein Festklemmen der Spindelmutter am Anschlag und somit auf der Spindel. Hierdurch blockiert der Motor und die Lager werden übermäßig beansprucht.

Daher wurde vorgeschlagen, die Spindelmutter durch Federn gedämpft gegen die Anschläge zu fahren. So wird in der gattungsbildenden DE 43 22 133 A1 eine Stellvorrichtung vorgeschlagen, bei der sich mit der Spindelmutter ein Dämpferkäfig mitbewegt, in dem die Mutter über gegeneinander liegende Tellerfedern angeordnet ist. Derartige Druckfederausführungen weisen jedoch den Nachteil auf, dass in den Endanschlägen unter Umständen eine Verspannung der Schraube auf der Spindel erfolgt und somit ein Anfahren in die entgegengesetzte Richtung erschwert wird.

Daher ist es Aufgabe der Erfindung, eine Stellvorrichtung zu schaffen, bei der ein Verklemmen des Spindeltriebs in den Endlagen auch bei Spindeln mit Selbsthemmung entfällt. Dabei soll gleichzeitig eine genaue Endlage angefahren werden können und ggf. ein Anfahren des Elektromotors in die entgegengesetzte Richtung erleichtert werden.

Diese Aufgabe wird dadurch gelöst, dass die Mittel zur Anschlagdämpfung zumindest eine auf der Gewindespindel angeordnete zweite Hülse aufweisen, an welcher eine zur Spindelmutter weisende Kegelstumpffläche ausgebildet ist, die mit einer zur zweiten Hülse weisenden Kegelstumpffläche der Spindelmutter oder eines mit der Spindelmutter fest verbundenen Bauteils korrespondiert. Auf diese Weise dreht sich die Kegelstumpffläche der zweiten Hülse in der Endstellung in die Kegelstumpffläche der Mutter, so dass der Motor durch die Haftreibung zwischen den beiden Kegelstumpfflächen sanft im Endanschlag abgebremst wird.

In einer weiterführenden Ausführungsform weisen die Mittel zur Anschlagdämpfung eine auf der Gewindespindel angeordnete dritte Hülse auf, an welcher eine zu einem geschlossenen Ende der ersten Hülse weisende Kegelstumpffläche ausgebildet ist, die mit einer zur dritten Hülse weisenden, am geschlossenen Ende der ersten Hülse ausgebildeten Kegelstumpffläche korrespondiert. Hierdurch kann in gleicher Weise wie in der ersten Endstellung auch in der zweiten Endstellung ein sanftes Bremsen des antreibenden Elektromotors erreicht werden.

In einer bevorzugten Ausführungsform ist der Öffnungswinkel der Kegelstumpffläche der zweiten Hülse gleich dem Öffnungswinkel der Kegelstumpffläche der Spindelmutter und der Öffnungswinkel der Kegelstumpffläche der dritten Hülse gleich dem Öffnungswinkel der Kegelstumpffläche der ersten Hülse. Durch diese gleichen Kegelwinkel wird die Kraft zwischen korrespondierenden Flächen gleichmäßig über die gesamten Kegelflächen verteilt und ein Herausziehen bei Rückdrehen des Motors vereinfacht.

Vorzugsweise weisen die zweite und dritte Hülse konische Bohrungen auf und sind in axialer Verlängerung der Gewindespindel fest mit der Gewindespindel verbundene kegelstumpfförmige Scheiben beabstandet voneinander angeordnet, wobei eine Druckfeder die Hülsen mit ihren konischen Bohrungen in entgegengesetzter Richtung mit ihrer Federkraft gegen die kegelstumpfförmigen Scheiben vorspannt. Durch die Druckkraft der Feder drehen sich somit die zweite und die dritte Hülse mit der Gewindespindel mit, bis in den Anschlagpunkten ein Abheben der zum Anschlagpunkt gewandten Scheibe von der korrespondierenden Hülse erfolgt, so dass die Anpresskraft zwischen den korrespondierenden Kegelflächen begrenzt wird. Hierdurch ist der Motor beim Start in die entgegengesetzte Richtung mit geringerer Kraft antreibbar.

In einer hierzu weiterführenden Ausführungsform ist die Druckfeder derart mit der zweiten und dritten Hülse verbunden, dass die Druckfeder bei relativer rotatorischer Bewegung zwischen der zweiten und der dritten Hülse in den Endanschlägen gleichzeitig als Torsionsfeder dient. Beim Einfahren in die Endstellungen wird somit die zum Endanschlag weisende Hülse von der korrespondierenden Kegelfläche gehalten, während die andere sich über ein bestimmtes Maß weiter dreht. Dieses Weiterdrehen führt jedoch zu einer Verspannung der nun auch als Torsionsfeder wirkenden Druckfeder, in der Energie gespeichert wird, die dem Motor bei Anlauf in entgegen gesetzter Richtung zur Verfügung steht.

Vorzugsweise sind die Kegelstumpfflächen als Steilkegel ausgeführt, so dass zwar eine gewisse Kraft bei rotatorischer Bewegung zwischen den Kegelflächen übertragen werden kann, jedoch ein Verklemmen verhindert wird, da bei Steilkegeln ein axiales Ausziehen weitestgehend kraftlos erfolgen kann.

Vorzugsweise ist das Gewinde der Gewindespindel zu beiden Seiten verlängert zu den nominellen Endlagen der Spindelmutter ausgebildet, so dass ein kurzes Nachlaufen des Elektromotors nicht zu einem Verklemmen beispielsweise der Mutter am Ende des Gewindeganges der Gewindespindel erfolgen kann. Es steht somit jeweils zu beiden Seiten ein zusätzlicher Stellweg zur Verfügung.

In einer besonderen Ausführungsform ist die erste Hülse von einer schraubenförmigen zweiten Druckfeder zumindest teilweise umgeben, die vorgespannt im Gehäuse angeordnet ist und deren erstes Ende gegen die Spindelmutter anliegt und deren zweites Ende gegen das umgebende Gehäuse anliegt. Eine derartige Feder kann Platz sparend im Gehäuse als Feder zum Verstellen des Antriebs in eine Notlaufposition bei Stromausfall genutzt werden.

In einer hierzu alternativen Ausführungsform ist auf einer Antriebswelle des Elektromotors, der mit der Gewindespindel verbunden ist, ein Zahnrad angeordnet, welches mit einem zweiten größeren Zahnrad kämmt, wobei das zweite größere Zahnrad auf einer am Gehäuse gelagerten Achse drehfest angeordnet ist, welche von einer vorgespannten Torsionsfeder umgeben ist, deren erstes Ende am Zahnrad befestigt ist und deren zweites Ende am feststehenden Gehäuse befestigt ist. Auch eine derartige Feder kann als Rücklauffeder zum Verstellen des stromlos geschalteten Motors in eine Notlaufposition benutzt werden. Zwar ist eine solche Ausführung platzintensiver, jedoch ist der Wirkungsgrad einer derartig angeordneten Rückstellfeder deutlich besser. Hier wird auch ein Rückdrehen in die fail-save Funktion erreicht, wenn bei der Spindelmutterpaarung Selbsthemmung auftreten würde.

In einer weiteren bevorzugten Ausführungsform ist ein Stirnradgetriebe zwischen der Antriebswelle des Elektromotors und der Gewindespindel angeordnet, wobei auf der Antriebswelle ein Antriebsritzel angeordnet ist, welches mit einem Hohlrad mit Innenverzahnung kämmt, welches die rotatorische Bewegung auf die Gewindespindel überträgt. Durch eine derartige Ausführung wird der mechanische Wirkungsgrad deutlich erhöht, so dass auch eine Druckfeder die fail-save Funktion ausführen könnte. Dennoch bleibt der Aufbau der Stellvorrichtung kompakt.

Derartig aufgebaute Stellvorrichtungen weisen somit eine deutlich geringere Belastung des antreibenden Elektromotors auf und verhindert ein Verklemmen in den Endanschlägen zuverlässig. Ein Rücklauf des Elektromotors wird bei derartigen Ausführungsformen im Vergleich zu bekannten Ausführungen unterstützt.

Zwei Ausführungsbeispiele sind in den Zeichnungen dargestellt und werden nachfolgend beschrieben.

Figur 1 zeigt eine Seitenansicht einer erfindungsgemäßen Stellvorrichtung in der ersten Endstellung in geschnittener Darstellung.

Figur 2 zeigt die erfindungsgemäße Stellvorrichtung aus Figur 1 in der zweiten Endstellung.

Figur 3 zeigt eine Seitenansicht einer zweiten Ausführung einer erfindungsgemäßen Stellvorrichtung mit unterschiedlich eingebauter Rückstellfeder in geschnittener Darstellung.

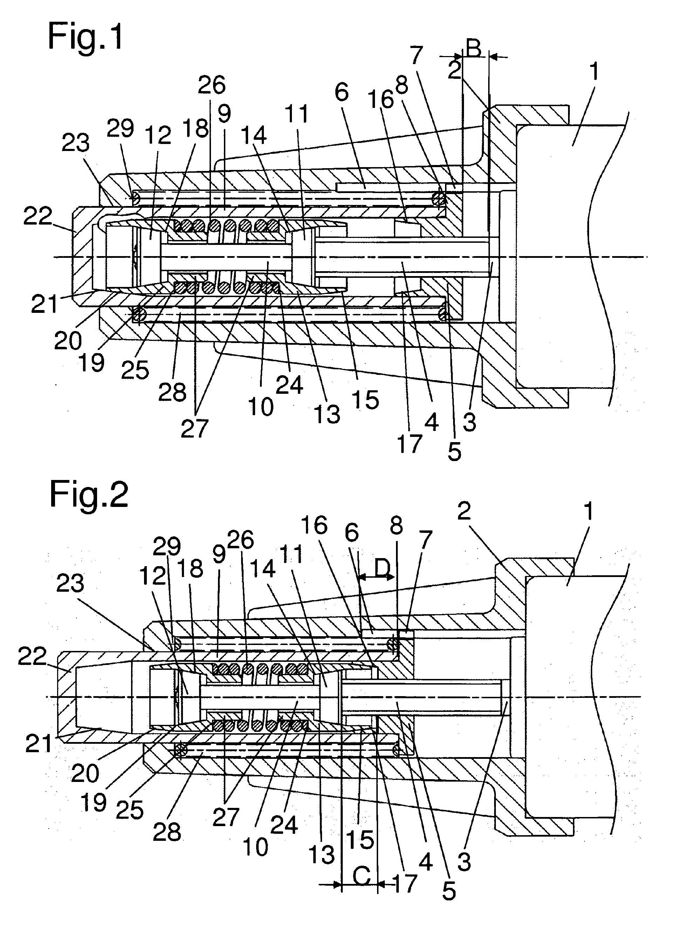

Die in den Figuren 1 und 2 dargestellte Stellvorrichtung besteht aus einem als Antrieb dienenden Elektromotor 1, der ebenso wie die übrige Stellvorrichtung in einem ein- oder mehrteiligen Gehäuse 2 angeordnet ist. Der Elektromotor 1 treibt eine Antriebswelle 3 an, welche in vorliegender Ausführungsform in der Verlängerung als Gewindespindel 4 ausgebildet ist. Auf der Gewindespindel 4 ist eine Spindelmutter 5 angeordnet, deren Innengewinde mit dem äußeren Gewinde der Spindel 4 korrespondiert. Über eine Nut 6 im Gehäuse 2, welche in axialer Richtung verläuft, wird die Spindelmutter 5, an der ein radial nach außen weisender Vorsprung 7 angeordnet ist, im Gehäuse geführt, so dass die Spindelmutter 5 keine rotatorische Bewegung, sondern lediglich eine lineare, in Achsrichtung verlaufende Bewegung durchführen kann.

Die Spindelmutter 5 weist einen vom Elektromotor 1 weg weisenden Absatz 8 auf, gegen den eine als Stellglied wirkende erste Hülse 9 anliegt. Die erste Hülse 9 ist an dieser Stelle fest mit der Spindelmutter 5 verbunden und ragt am axial entgegen gesetzten abtriebseitigen Ende der Stellvorrichtung durch eine Öffnung 23 im Gehäuse 2.

In Richtung zum Abtrieb, also in entgegengesetzer Richtung zum Elektromotor 1, ist die Gewindespindel 4 in Form einer Welle 10 verlängert. Auf der Welle 10 sind eine erste kegelstumpfförmige Scheibe 11 und eine zweite kegelstumpfförmige Scheibe 12 angeordnet, wobei die erste kegelstumpfförmige Scheibe 11 in unmittelbarer Verlängerung zur Gewindespindel 4 angeordnet ist und die zweite kegelstumpfförmige Scheibe 12 die Welle 10 zur Abtriebsseite hin begrenzt. Diese kegelstumpfförmigen Scheiben 11 und 12 sind dabei derart zueinander ausgerichtet, dass deren gedachte Kegelspitzen zueinander weisen.

Die kegelstumpfförmige Scheibe 11 sowie der daran anschließende Teil der Welle 10 bzw. der Gewindespindel 4 ist von einer zweiten Hülse 13 umgeben, in der eine zur kegelstumpfförmigen Scheibe 11 korrespondierende konische Bohrung 14 ausgebildet ist, so dass eine reibschlüssige Verbindung zwischen der kegelstumpfförmigen Scheibe 11 und der konischen Bohrung 14 hergestellt werden kann.

Am zur Gewindespindel 4 weisenden Ende der zweiten Hülse 13 ist eine radial außen liegende Kegelstumpffläche 15 ausgebildet, welche mit einer Kegelstumpffläche 16 korrespondiert, die an dem zur zweiten Hülse 13 weisenden Ende der Spindelmutter 5 ausgebildet ist, wobei diese Kegelstumpffläche 16 am radial innen liegenden Bereich eines Fortsatzes 17 der Spindelmutter 5 ausgebildet ist, der sich in axialer Richtung erstreckt.

In gleicher Weise korrespondiert die zweite kegelstumpfförmige Scheibe 12 mit einer konischen Bohrung 18 einer dritten Hülse 19, welche wiederum die zweite Scheibe 12 sowie das an die Scheibe 12 grenzende Ende der Welle 10 in Richtung zum Elektromotor 1 umgibt und sich in Richtung zum Abtrieb wiederum in Form einer Kegelstumpffläche 20, welche radial außen ausgebildet ist, fortsetzt. Diese zum Abtrieb weisende Kegelstumpffläche 20 der dritten Hülse 19 korrespondiert mit einer entsprechend ausgebildeten Kegelstumpffläche 21, welche am radial innen liegenden geschlossenen Ende 22 der ersten Hülse 9 ausgebildet ist. Die jeweils korrespondierenden Kegelstumpfflächen 15, 16 und 20, 21 sind dabei als Steilkegel ausgebildet, wobei die Kegelflächen 15, 20 der zweiten und dritten Hülse 13, 19 genauso steil sind wie die korrespondierenden Kegelstumpfflächen 16, 21. Hierdurch wird eine ungleichmäßige Krafteinleitung über die Flächen vermieden und die benötigten Auszugskräfte beim Rückdrehen verringert.

Die zweite Hülse 13 sowie die dritte Hülse 19 weisen jeweils zueinander weisende Absätze 24, 25 auf, gegen die eine erste Druckfeder 26 vorgespannt anliegt. Diese Druckfeder 26 umgibt gleichzeitig die sich axial um die Welle 10 erstreckenden Enden 27 der Hülsen 13, 19. Diese Druckfeder 26 spannt die beiden Hülsen 13, 19 mit deren konischen Bohrungen 14, 18 gegen die kegelstumpfförmigen Scheiben 11, 12, wodurch ein Reibkraftschluss erreicht wird. Wie im Weiteren noch beschrieben wird, dienen die Hülsen 13, 19 sowie die Druckfeder 16 gemeinsam mit den Scheiben 11, 12 und den Kegelstumpfflächen 21, 16 als Mittel zur Anschlagdämpfung. Es sei noch bemerkt, dass die erste Druckfeder 26 als Schlingfeder auf den Hülsen 13 und 19 haftet und somit bei Verdrehung der beiden Hülsen 13 und 19 gegeneinander tordiert wird.

Zwischen dem Gehäuse 2 und der ersten Hülse 9 ist die erste Hülse 9 umgebend eine zweite Druckfeder 28 angeordnet, deren erstes Ende sich gegen den Absatz 8 der Spindelmutter 5 legt und deren entgegengesetztes Ende gegen ein axial inneres Ende 29 des Gehäuses 2 anliegt. Diese als Schraubenfeder ausgeführte zweite Druckfeder 28 ist unter Vorspannung im Gehäuse 2 angeordnet und dient als Rückstellfeder zum Verstellen des Abtriebs in eine Notlaufposition.

Die Funktionsweise dieser Stellvorrichtung wird im Folgenden beschrieben.

Bei normaler Drehung zwischen den Endanschlägen der Stellvorrichtung wird die Gewindespindel 4 durch den Elektromotor 1 in Drehung versetzt. Entsprechend drehen sich die kegelstumpfförmigen Scheiben 11 und 12 sowie die dazwischen liegende Welle 10 mit. Aufgrund der Vorspannung der ersten Druckfeder 26 werden die beiden Hülsen 13 und 19 mit ihren konischen Bohrungen 14 und 18 gegen die kegelstumpfförmigen Scheiben 12 und 11 gedrückt, so dass sich die gesamten Mittel zur Anschlagdämpfung entsprechend der Spindeldrehung im Gehäuse 2 mit drehen.

Durch die Drehung der Spindel 4 wird die Spindelmutter 5 entsprechend der Steigung der Gewindespindel 4 auf der Gewindespindel 4 linear in Achsrichtung bewegt, da sie in der Nut 6 entsprechend geführt ist. Die Drehung der Spindel 4 wird somit in eine lineare Bewegung umgewandelt. Durch diese Hin- und Herbewegung der Spindelmutter 5 wird somit auch das Stellglied bzw. die erste Hülse 9 in axialer Richtung bewegt, wobei die zweite Druckfeder 28 beim Ausfahren der ersten Hülse 9 zusätzlich belastet wird, also Energie speichert.

In der Figur 1 erreicht die Spindelmutter 5 und somit das Stellglied bzw. die erste Hülse 9 gerade das nominelle Stellwegende im eingefahrenen Zustand. In dieser Position erreicht die Kegelstumpffläche 20 der dritten Hülse 19 gerade die Kegelstumpffläche 21 der ersten Hülse 9. Als Bremsweg steht nun noch der Abstand (B) zwischen dem zum Elektromotor 1 weisenden Ende der Spindelmutter 5 und dem Gewindeende der Spindelmutter 5 zur Verfügung.

Läuft der Elektromotor 1 nun noch geringfügig weiter, so wird die Spindelmutter 5 weiter geringfügig in Richtung zum Elektromotor 1 geführt, wodurch sich die Kegelstumpfflächen 20 und 21 ineinander drehen. Hierdurch nimmt die Kegelstumpffläche 21 und somit die erste Hülse 9 die dritte Hülse 19 über die Kegelstumpffläche 20 in Richtung zum Elektromotor mit, wodurch die erste Druckfeder 26 gestaucht wird. Dies bedeutet jedoch gleichzeitig, dass sich die dritte Hülse 19 bzw. deren konische Bohrung 18 von der kegelstumpfförmigen Scheibe 12 löst. Hierdurch wird der Reibschluss zwischen der Scheibe 12 und der dritten Hülse 19 aufgehoben und es entsteht stattdessen ein Reibschluss zwischen der ersten Hülse 9 und der dritten Hülse 19. Bei Weiterdrehen der Welle 3 wird somit die Druckfeder 26 durch die rotatorisch feststehende dritte Hülse 19 relativ zur zweiten Hülse 13 tordiert, da diese entsprechend der Bewegung der Gewindespindel 4 weitergedreht wird, während die dritte Hülse 19 durch den Reibschluss zur ersten Hülse 9 in ihrer Drehbewegung gestoppt wird.

Außer der bereits vorhandenen Bremswirkung beim Anfahren in die korrespondierenden Kegelstumpfflächen 20, 21 wird nun durch die Torsion der ersten Druckfeder 26 der Elektromotor 1 und somit die darin rotierende Ankermasse des Elektromotors 1 federnd abgebremst. Gleichzeitig wird ein Rückdrehmoment durch die Feder 26 aufgebaut, welche dazu dient, den Elektromotor 1 einfacher in Gegenrichtung starten zu können, wenn das Stellglied 9 wieder in entgegengesetzter Richtung bewegt werden soll.

Wird der Elektromotor 1 nun in entgegengesetzter Richtung bewegt, so hilft, wie bereits oben erwähnt, die tordierte Druckfeder 26, da ihre gespeicherte Energie und die daraus resultierende Kraft in der gleichen Richtung wirkt wie die auf den Anker wirkende Kraft des Elektromotors 1. Ein Lösen der Kegelstumpfflächen 20, 21 voneinander wird durch die Ausführung der Kegelstumpfflächen 15, 16, 20, 21 als Steilkegel sichergestellt. Nach dem Anlauf des Elektromotors, liegen die konischen Bohrungen 14, 18 erneut auf den kegelstumpfförmigen Scheiben 11, 12, so dass hier erneut der Reibkraftschluss gewährleistet wird. Beim Verfahren des Antriebs in Richtung zur zweiten Endlage werden die Mittel zur Anschlagdämpfung erneut komplett mit der Spindel gedreht, bis die zweite Endstellung erreicht wird.

In gleicher Weise wie bereits am anderen Anschlagende wirken nun die Kegelstumpfflächen 16 und 15 miteinander, so dass die zweite Hülse 13 in ihrer Bewegung gebremst wird und sich gleichzeitig mit ihrer konischen Bohrung 14 von der ersten kegelstumpfförmigen Scheibe 11 löst. Erneut wird hier, allerdings in entgegen gesetzter Richtung durch die tordierende Feder 26 ein Rückstellmoment aufgebaut und der Anschlag deutlich abgedämpft. Als zusätzlicher Verstellweg steht hier je nach gewählter Ausführung entweder der Abstand (C) zwischen dem zum Elektromotor 1 weisenden axialen Ende der kegelstumpfförmigen Scheibe 11 und der am Ende des Fortsatzes 17 angeordneten Planfläche der Spindelmutter 5 oder der Abstand (D) zwischen dem Absatz 8 der Spindelmutter 5 und dem Ende der Nut 6 zur Verfügung.

Es sollte klar sein, dass einer rechtsgängigen Spindel 4 eine linksgängige Schraubenfeder 26 sowie umgekehrt einer rechtsgängigen Spindel 4 eine linksgängige Schraubenfeder 26 zugeordnet wird.

Als Vorteil zeigt sich, dass eine solche Ausführung nicht nur sehr Motor schonend arbeitet, sondern gleichzeitig auch bei fehlerhaft wirkenden Sensorsystemen eine Richtungsumkehr des Elektromotors 1 ermöglicht. Durch diese abgefederten Auslaufstrecken an den unterschiedlichen Stellwegenden werden so durch die verlängerten Bremswege impulsartig überhöhte Bremsmomente vermieden und gleichzeitig ein Rückdrehmoment aufgebaut.

Es sei noch erwähnt, dass die zweite Druckfeder 28 die Spindelmutter 5 in Richtung zur eingefahrenen Endstellung belastet, welche als Notlaufposition dient. Eine derartige Rückstellung funktioniert jedoch lediglich bei einer Spindelmutterpaarung ohne Selbsthemmung. Es kann jedoch erforderlich sein, insbesondere bei dem Wunsch nach sehr genauen kleinen Stellwegen, eine Paarung mit Selbsthemmung zu verwenden. Somit kann es vorkommen, dass zur Erreichung des erforderlichen Wirkungsgrades eine Getriebeübersetzung zwischen Motorantrieb und Spindel verwendet werden muss. Hier kann beispielsweise eine Getriebestufe mit Stirnverzahnung zwischen Motor und Spindel eingefügt werden, wobei die Spindel als Großrad ausgeführt werden muss.

Vorteilhafterweise sollte die Spindel über ein Hohlrad mit Innenverzahnung angetrieben werden, da auf diese Art und Weise das gesamte Bauvolumen gering gehalten kann. Des Weiteren entsteht eine bessere Schmiegung der Wälzkreise des auf der Motorwelle angeordneten Ritzelrades sowie des Hohlrades, wodurch bei gleichem Bauraum Paarungen von Zähnezahlen mit größerer Übersetzung möglich sind. Es entsteht weniger Reibung in der Getriebestufe, so dass die Druckfeder 28 bei der Verstellung in die fail-save Position weniger Kraft liefern muss. Dies bedeutet andererseits, dass der Motor die Spindelmutter 5 gegen eine geringere Kraft verstellen muss, so dass ein kleinerer Elektromotor verwendet werden kann.

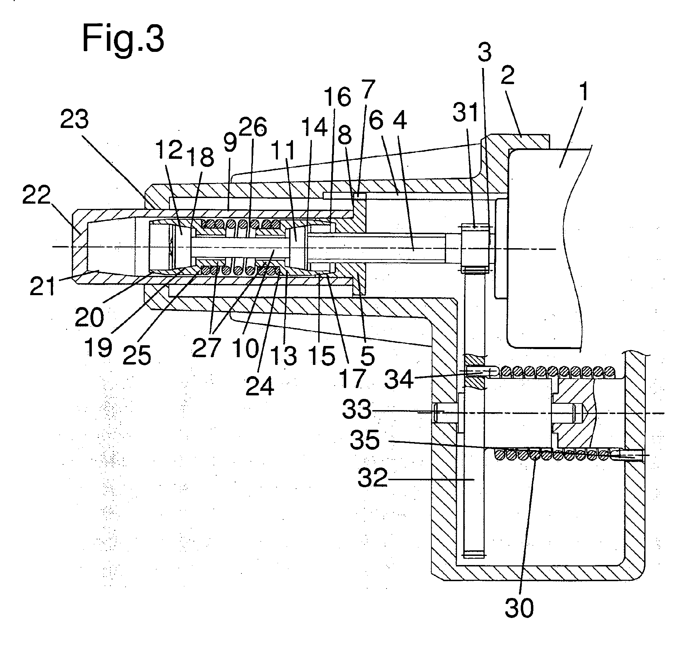

In Figur 3 ist eine weitere Ausführungsform gezeigt, bei der die zweite Druckfeder 28 entfällt und deren Funktion durch eine verspannte Torsionsfeder 30 wahrgenommen wird. Der übrige Aufbau ist im Wesentlichen gleichartig zu der Ausführung gemäß der Figuren 1 und 2. Auf der Antriebswelle 3 des Elektromotors 1 ist hier jedoch ein Antriebsritzel 31 angeordnet, welches mit einem zweiten Zahnrad 32 kämmt, welches im Gehäuse 2 über eine Achse 33 gelagert ist. Um die Achse 33 ist die vorgespannte Torsionsfeder 30 angeordnet, deren erstes Ende 34 am Zahnrad 32 befestigt ist und deren entgegengesetztes Ende 35 am Gehäuse befestigt ist, so dass bei Drehung des Zahnrades 32 die Torsionsfeder 30 tordiert wird. Hierdurch wirkt die Feder 30 direkt auf die Antriebswelle 3 des Elektromotors 1, wodurch deren Wirkungsgrad wiederum deutlich erhöht wird. Die zu verrichtende Spannarbeit des Elektromotors 1 wird entsprechend reduziert. Des Weiteren reduziert sich die Windungszahl entsprechend des Übersetzungsverhältnisses des Getriebes zwischen dem Antriebsritzel 31 und dem zweiten Zahnrad 32. Somit wird es möglich eine Rückstellung in eine Notlaufposition auch bei sonst selbsthemmend ausgeführtem Getriebe sicher zu stellen.

Es wird deutlich, dass die erfindungsgemäßen Stellvorrichtungen zuverlässig ein Verklemmen einer linearen Stellvorrichtung in den Endstellungen verhindern und gleichzeitig einen Anschlag in den Endstellungen deutlich dämpfen. Zusätzlich wird ein Rückstellmoment aufgebaut, um ein Rückdrehen des Elektromotors zu erleichtern. Möglichkeiten zur Verstellung jeglichen Spindeltriebes in eine fail-save Stellung werden offenbart.

## Patentansprüche

1. Stellvorrichtung zur linearen Verstellung eines Stellgliedes
mit einem Gehäuse (2),
in dem ein reversibler Elektromotor (1) angeordnet ist,
über den eine Gewindespindel (4) in rotatorische Bewegung versetzbar ist,
auf welcher eine durch eine im Gehäuse angeordnete Führung (6) gegen rotatorische Bewegung festgelegte Spindelmutter (5) angeordnet ist,
welche fest mit einer als Stellglied dienenden ersten Hülse (9) verbunden ist,
die die Gewindespindel zumindest teilweise umgibt und welche durch eine Öffnung (23) im Gehäuse nach außen ragt,
wobei Mittel zur Anschlagdämpfung im Gehäuse angeordnet sind,
**dadurch gekennzeichnet, dass**
die Mittel zur Anschlagdämpfung zumindest eine auf der Gewindespindel (4) angeordnete zweite Hülse (13) aufweisen, an welcher eine zur Spindelmutter (5) weisende Kegelstumpffläche (15) ausgebildet ist, die mit einer zur zweiten Hülse (13) weisenden Kegelstumpffläche (16) der Spindelmutter (5) oder eines mit der Spindelmutter (5) fest verbunden Bauteils korrespondiert.

2. Stellvorrichtung zur linearen Verstellung eines Stellgliedes nach Anspruch 1, **dadurch gekennzeichnet, dass**
die Mittel zur Anschlagdämpfung eine auf der Gewindespindel (4) angeordnete dritte Hülse (19) aufweisen, an welcher eine zu einem geschlossenen Ende (22) der ersten Hülse (9) weisende Kegelstumpffläche (20) ausgebildet ist, die mit einer zur dritten Hülse (19) weisenden, am geschlossenen Ende (22) der ersten Hülse (9) ausgebildeten Kegelstumpffläche (21) korrespondiert.

3. Stellvorrichtung zur linearen Verstellung eines Stellgliedes nach einem der Ansprüche 1 oder 2, **dadurch gekennzeichnet, dass**
der Öffnungswinkel der Kegelstumpffläche (15) der zweiten Hülse (13) gleich dem Öffnungswinkel der Kegelstumpffläche (16) der Spindelmutter (5) und der Öffnungswinkel der Kegelstumpffläche (20) der dritten Hülse (19) gleich dem Öffnungswinkel der Kegelstumpffläche (21) der ersten Hülse (9) ist.

4. Stellvorrichtung zur linearen Verstellung eines Stellgliedes nach einem der vorhergehenden Ansprüche, **dadurch gekennzeichnet, dass**
die zweite und dritte Hülse (13, 19) konische Bohrungen (14, 18) aufweisen und in axialer Verlängerung der Gewindespindel (4) zwei fest mit der Gewindespindel (4) verbundene kegelstumpfförmige Scheiben (11, 12) beabstandet voneinander angeordnet sind, wobei eine Druckfeder (26) die Hülsen (13, 19) mit ihren konischen Bohrungen (14, 18) in entgegen gesetzter Richtung mit ihrer Federkraft gegen die kegelstumpfförmigen Scheiben (11, 12) axial vorspannt.

5. Stellvorrichtung zur linearen Verstellung eines Stellgliedes nach einem der vorhergehenden Ansprüche, **dadurch gekennzeichnet, dass**
die Druckfeder (26) derart mit der zweiten und dritten Hülse (13, 19) verbunden ist, dass die Druckfeder (26) bei relativer rotatorischer Bewegung zwischen der zweiten Hülse (13) und der dritten Hülse (19) in den Endlagen gleichzeitig als Torsionsfeder dient.

6. Stellvorrichtung zur linearen Verstellung eines Stellgliedes nach einem der vorhergehenden Ansprüche, **dadurch gekennzeichnet, dass**
die Kegelstumpfflächen (15, 16, 20, 21) als Steilkegel ausgeführt sind.

7. Stellvorrichtung zur linearen Verstellung eines Stellgliedes nach einem der vorhergehenden Ansprüche, **dadurch gekennzeichnet, dass**
das Gewinde der Gewindespindel (4) zu beiden Seiten verlängert zu den nominellen Endlagen der Spindelmutter (5) ausgebildet ist.

8. Stellvorrichtung zur linearen Verstellung eines Stellgliedes nach einem der vorhergehenden Ansprüche, **dadurch gekennzeichnet, dass**
die erste Hülse (9) von einer schraubenförmigen zweiten Druckfeder (28) zumindest teilweise umgeben ist, die vorgespannt im Gehäuse (2) angeordnet ist und deren erstes Ende gegen die Spindelmutter (5) anliegt und deren zweites Ende gegen das umgebende Gehäuse (2) anliegt.

9. Stellvorrichtung zur linearen Verstellung eines Stellgliedes nach einem der Ansprüche 1 bis 7, **dadurch gekennzeichnet, dass**
auf einer Antriebswelle (3) des Elektromotors (1), der mit der Gewindespindel (4) verbunden ist ein Antriebsritzel (31) angeordnet ist, welches mit einem zweiten größeren Zahnrad (32) kämmt, wobei das zweite größere Zahnrad (32) auf einer am Gehäuse (2) gelagerten Achse (33) drehfest angeordnet ist, welche von einer vorgespannten Torsionsfeder (30) umgeben ist, deren erstes Ende (34) am Zahnrad (32) befestigt ist und deren zweites Ende (35) am feststehenden Gehäuse (2) befestigt ist.

10. Stellvorrichtung zur linearen Verstellung eines Stellgliedes nach einem der vorhergehenden Ansprüche, **dadurch gekennzeichnet, dass**
ein Stirnradgetriebe zwischen der Antriebswelle (3) des Elektromotors (1) und der Gewindespindel (4) angeordnet ist, wobei auf der Antriebswelle (4) ein Antriebsritzel (31) angeordnet ist, welches mit einem Hohlrad mit Innenverzahnung kämmt, welches die rotatorische Bewegung auf die Gewindespindel (4) überträgt.

## Claims

1. Actuator device for linear adjustment of an actuator
comprising a housing (2)
in which a reversible electric motor (1) is arranged
via which a threaded spindle (4) can be caused to rotate,
on which spindle a spindle nut (5) is arranged fixed against rotation by means of a guide (6) provided in the housing,
which nut is rigidly connected with a first sleeve (9) serving as an actuator,
said sleeve at least partly surrounding the threaded nut and extending to the outside through an opening (23) in the housing,
wherein means for stop dampening are arranged in the housing,
**characterized in that**
the stop dampening means comprise at least one second sleeve (13) arranged on the threaded spindle (4), which sleeve is formed with a frustoconical surface (13) directed towards the spindle nut (5) that corresponds to a frustoconical surface (16) of the spindle nut (5) or of a component rigidly connected with the spindle sleeve (5), the frustoconical surface being directed towards the second sleeve (13).

2. Actuator device for linear adjustment of an actuator according to claim 1, **characterized in that** the stop damping means comprise a third sleeve (19) arranged on the threaded spindle (4), which is formed with a frustoconical surface (20) directed towards a closed end (22) of the first sleeve (9), the surface corresponding to a frustoconical surface (21) formed on the closed end (22) of the first sleeve (9) and directed towards the third sleeve (19).

3. Actuator device for linear adjustment of an actuator according to one of claims 1 or 2, **characterized in that** the opening angle of the frustoconical surface (15) of the second sleeve (13) is equal to the opening angle of the frustoconical surface (16) of the spindle nut (5, and the opening angle of the frustoconical surface (20) of the third sleeve (19) is equal to the opening angle of the frustoconical surface (21) of the first sleeve (9).

4. Actuator device for linear adjustment of an actuator of one of the preceding claims, **characterized in that** the second and the third sleeve (13, 19) have conical bores (14, 18) and two spaced frustoconical discs (11, 12) are arranged in axial extension of the threaded spindle (4), the discs being fixedly connected with the threaded spindle (4), wherein a compression spring (26), through its spring force, axially biases the sleeves (13, 19) in opposite directions, with their conical bores (14, 18) against the frustoconical discs (11, 12).

5. Actuator device for linear adjustment of an actuator of one of the preceding claims, **characterized in that** the compression spring (26) is connected with the second and third sleeves (13, 19) such that in the event of a rotational movement between the second sleeve (13) and the third sleeve (19), the compression spring (26) at the same serves as a torsional spring in the end positions.

6. Actuator device for linear adjustment of an actuator of one of the preceding claims, **characterized in that** the frustoconical surfaces (15, 16, 20, 21) are configured as tapered cones.

7. Actuator device for linear adjustment of an actuator of one of the preceding claims, **characterized in that** the thread of the threaded spindle (4) is extended on both sides with respect to the nominal end positions of the spindle nut (5).

8. Actuator device for linear adjustment of an actuator of one of the preceding claims, **characterized in that** the first sleeve (9) is at least partly surrounded by a helical second compression spring (28) arranged biased in the housing (2) and whose first end bears against the spindle nut (5) and whose second end bears against the surrounding housing (2).

9. Actuator device for linear adjustment of an actuator of one of claims 1 to 7, **characterized in that** a drive shaft (3) of the electric motor (1) connected with the threaded spindle (4) is provided with a drive pinion (31) meshing with a second, larger gear (32), wherein the second, larger gear (32) is arranged on an axle (33) for rotation therewith, the axle being supported at the housing (2) and being surrounded by a biased torsional spring (30) whose first end (34) is fastened to the gear (32) and whose second end (35) is fastened at the stationary housing (2).

10. Actuator device for linear adjustment of an actuator of one of the preceding claims, **characterized in that** a spur gearing is arranged between the drive shaft (3) of the electric motor (1) and the threaded spindle (4), a drive pinion (31) being arranged on the drive shaft (3), which pinion meshes with a ring gear with internal toothing which transfers the rotational movement to the threaded spindle (4).

## Revendications

1. Dispositif de réglage destiné au réglage linéaire d'un actionneur
comprenant un boitier (2),
dans lequel est disposé un électromoteur (1) réversible,
par lequel une broche filetée (4) peut être tournée,
sur quelle broche est disposé un écrou de broche (5) fixé contre mouvement rotatif par un guidage (6) prévu dans le boitier,
ledit écrou étant relié fixement à une première douille (9) servant comme actionneur,
qui entoure au moins partiellement ladite broche filetée et qui s'étend vers l'extérieur à travers une ouverture (23) dans le boitier,
des moyens d'amortissement de butée étant disposés dans ledit boitier,
**caractérisé en ce que**
les moyens d'amortissement de butée comprennent au moins une deuxième douille (13) disposée sur ladite broche filetée (4), ladite douille étant formée avec une face tronconique (15) dirigée vers ladite broche filetée (5), ladite face correspondant avec une face tronconique (16) dudit écrou de broche (5) ou d'un élément relié fixement à l'écrou de broche (5), la dernière face étant dirigée vers la deuxième douille (13).

2. Dispositif de réglage destiné au réglage linéaire d'un actionneur selon la revendication 1, **caractérisé en ce que** les moyens d'amortissement de butée comprennent une troisième douille (19) disposée sur ladite broche filetée (4), qui est formée avec une face tronconique (20) dirigée vers une extrémité fermée (22) de la première douille (9), cette face correspondant avec une face tronconique (21) formée à l'extrémité fermée (22) de ladite première douille (9) et dirigée vers la troisième douille (19).

3. Dispositif de réglage destiné au réglage linéaire d'un actionneur selon les revendications 1 ou 2, **caractérisé en ce que** l'angle d'ouverture de la face tronconique (15) de la deuxième douille (13) est égal à l'angle d'ouverture de la face tronconique (16) dudit écrou de broche (5), et l'angle d'ouverture de la face tronconique (20) de la troisième douille (19) est égal à l'angle d'ouverture de la face tronconique (21) de la première douille (9).

4. Dispositif de réglage destiné au réglage linéaire d'un actionneur selon l'une quelconque des revendications précédentes, **caractérisé en ce que** la deuxième et la troisième douille (13, 19) comprennent des alésages (14, 18) coniques, et deux disques (11, 12) espacées et reliées fixement à l'écrou de broche (4) sont disposées dans le prolongement axial de ladite broche filetée (4), un ressort de pression (26), par sa résilience, pré-contraignant lesdites douilles (13, 19) axialement dans des directions opposées, avec leurs alésages coniques (14, 18) contre les disques tronconiques (11, 12).

5. Dispositif de réglage destiné au réglage linéaire d'un actionneur selon l'une quelconque des revendications précédentes, **caractérisé en ce que** ledit ressort de pression (26) est relié à la deuxième et la troisième douille (13, 19) de sorte que, lors d'un mouvement de rotation relatif entre la deuxième douille (13) et la troisième douille (19), ledit ressort de pression (26) sert à la fois comme ressort de torsion dans les positions finales.

6. Dispositif de réglage destiné au réglage linéaire d'un actionneur selon l'une quelconque des revendications précédentes, **caractérisé en ce que** les faces tronconiques (15, 16, 20, 21) sont en forme de cône prononcé.

7. Dispositif de réglage destiné au réglage linéaire d'un actionneur selon l'une quelconque des revendications précédentes, **caractérisé en ce que** le filetage de la broche filetée (4) est prolongé à ses deux côtés au-delà des positions finales de l'écrou de broche (5).

8. Dispositif de réglage destiné au réglage linéaire d'un actionneur selon l'une quelconque des revendications précédentes, **caractérisé en ce que** la première douille (9) est au moins partiellement entourée par un deuxième ressort de pression (9) en forme d'hélice disposé de manière précontrainte et dont la première extrémité s'appuie sur l'écrou de broche (5) et la deuxième extrémité s'appuie sur le boitier (2) entourant.

9. Dispositif de réglage destiné au réglage linéaire d'un actionneur selon l'une quelconque des revendications 1 à 7, **caractérisé en ce qu'**un pignon d'entrainement (31) est disposé sur un arbre d'entrainement (3) dudit électromoteur (1) relié à la broche filetée (4), ledit pignon étant en prise avec une deuxième roue dentée plus grande (32), ladite deuxième roue dentée (32) plus grande étant disposée sur un axe (33) supporté au boitier (2) pour tourner avec cet axe, ledit axe étant entouré par un ressort de torsion (30) précontraint dont la première extrémité (34) est fixée sur la roue dentée (32) et dont la deuxième extrémité (35) est fixée sur le boitier (2) stationnaire.

10. Dispositif de réglage destiné au réglage linéaire d'un actionneur selon l'une quelconque des revendications précédentes, **caractérisé en ce qu'**un engrenage droit est disposé entre ledit arbre d'entrainement (3) dudit électromoteur (1) et ladite broche filetée (4), ledit arbre d'entrainement (3) étant muni d'un pignon d'entrainement (31) en prise avec une couronne à dentelure intérieure qui transfert le mouvement rotatif à la broche filetée (4).
